# EUROPEAN PATENT APPLICATION

(11) **EP 4 516 408 A1**
(43) Date of publication of application: **05.03.2025**
(21) Application number: 24191975.2
(22) Date of filing: 31.07.2024
(51) Int. Cl.: B05B 1/32

(54) **NOZZLE ASSEMBLY FOR VEHICLE**

(30) Priority: 29.08.2023 KR 20230114008
(71) Applicant: Hyundai Motor Company, Seoul 06797 (KR); Kia Corporation, Seocho-gu Seoul 06797 (KR)
(72) Inventor: JEONG, Pu Reum, 18280 Gyeonggi-do (KR); SHIM, Hyo Sub, 18280 Gyeonggi-do (KR); PARK, In Tae, 18280 Gyeonggi-do (KR); YOU, Sung Jin, 18280 Gyeonggi-do (KR); NAM, Sang Hyeok, 18280 Gyeonggi-do (KR); BAN, Hyeon Seok, 18280 Gyeonggi-do (KR); KIM, Hak Yoon, 18280 Gyeonggi-do (KR)
(74) Representative: Hoffmann Eitle

(57) **Abstract**

A nozzle assembly includes a first nozzle device that provides a fluid passage, in which a fluid flows, and a second nozzle device that surrounds the first nozzle device, and when an imaginary straight line passing through the fluid passage and extending in a direction, in which the fluid flows, is defined as a reference straight line, the first nozzle device includes a spacing area having a shape that is recessed in a direction that faces the reference straight line to be spaced apart from a portion of the second nozzle device. The nozzle assembly may be fixed to a body of a vehicle as part of an ejector for ejecting fluid having a pressure to a targeted location such as a hydrogen fuel cell of the vehicle.

## Description

### CROSS-REFERENCE TO RELATED APPLICATION

This application claims the benefit of Korean Patent Application No. 10-2023-0114008, filed in the Korean Intellectual Property Office on August 29, 2023, the entire contents of which are incorporated herein by reference.

### BACKGROUND

### (a) Technical Field

The present disclosure relates to a nozzle assembly, more particularly, to the nozzle assembly that may form part of an ejector used to eject pressurized fluid to a targeted location, such as a hydrogen fuel cell used to power a vehicle.

### (b) Description of the Related Art

A nozzle may have an ejection hole, through which a fluid may be ejected. The nozzle may be used to eject a fluid (as an example, hydrogen) having a high fluid velocity to a targeted space. For example, the nozzle may include a nozzle assembly that may eject the fluid having various fluid velocities in correspondence to the changed fluid pressure as a cross-section of the fluid passage is changed when a fluid pressure of the fluid is changed. The nozzle assembly is manufactured such that the cross-section of the fluid passage becomes greater or smaller when the fluid pressure becomes higher or lower.

The conventional nozzle assembly is manufactured of an elastic material such that the cross-section of the fluid passage becomes greater or smaller as the fluid pressure is changed as described above. Meanwhile, according to the conventional nozzle assembly, a plastic deformation occurs when the fluid pressure of the fluid that flows in the fluid passage becomes excessively higher, and thus an original function thereof cannot be performed any further.

Accordingly, a need for a nozzle assembly that may minimize a plastic deformation regardless of a magnitude of the fluid pressure recently has been increased.

### SUMMARY

A nozzle assembly according to the present disclosure may be fixed to a body of a vehicle. In particular, the nozzle assembly may be a component of an ejector configured to eject fluid having a pressure to a targeted location such as a hydrogen fuel cell of the vehicle.

An aspect of the present disclosure provides a nozzle assembly that may ensure a durability performance by minimizing a plastic deformation regardless of a magnitude of a fluid pressure.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a nozzle assembly includes a first nozzle device that provides a fluid passage, in which a fluid flows, and a second nozzle device disposed to surround the first nozzle device, and when an imaginary straight line passing through the fluid passage and extending in a direction, in which the fluid flows, is defined as a reference straight line, the first nozzle device includes a spacing area having a shape that is recessed in a direction that faces the reference straight line to be spaced apart from a portion of the second nozzle device.

The spacing area may be recessed in the direction that is a radial direction of the second nozzle device.

Furthermore, the nozzle assembly may further include an attachment area having a shape protruding in a direction that becomes more distant from the reference straight line to be attached to another portion of the second nozzle device.

Furthermore, a first distance that is a spacing distance between the spacing area and the reference straight line may be smaller than a second distance that is a spacing distance between the attachment area and the reference straight line.

Furthermore, the fluid passage may be defined by an inner surface of the first nozzle device, and the inner surface of the first nozzle device may include a first inner surface defining an inner surface of the spacing area and having a cape shape, and a second inner surface defining an inner surface of the attachment area and having a bay shape.

Furthermore, a radius of curvature of the first inner surface in the radial direction that is a direction that is perpendicular to the reference straight line may be greater than or equal to a radius of curvature of the second inner surface in the radial direction.

Furthermore, the radial direction may be defined as a direction that is perpendicular to the reference straight line, and a radius of curvature of at least a portion of an outer surface of the attachment area disposed on an opposite side of the second inner surface, in the radial direction, may correspond to a radius of curvature of at least a portion of an inner surface of the second nozzle device in the radial direction.

Furthermore, when, among the radial directions, a direction that faces the reference straight line is defined as a contraction direction and, among the radial directions, a direction that becomes more distant from the reference straight line is defined as an expansion direction, each of the first nozzle device and the second nozzle device may be configured to be expanded in the expansion direction or contracted in the contraction direction with respect to the reference straight line in a state between a first state in which the fluid passage is not expanded, and a second state in which the fluid passage is expanded more than in the first state.

Furthermore, an inner surface of the first nozzle device may be configured to contact the fluid flowing in the fluid passage, the first nozzle device may be configured to be expanded with respect to the reference straight line by the fluid in contact when a fluid pressure of the fluid is higher than a threshold pressure, and the second nozzle device may be configured to be expanded with respect to the reference straight line through expansion of the first nozzle device.

Furthermore, a portion of an inner surface of the second nozzle device may be configured to contact a portion of an outer surface of the first nozzle device, the second nozzle device may be configured to be contacted with respect to the reference straight line by a restoring force when the fluid pressure of the fluid becomes lower from the state, in which the first nozzle device is expanded, and the first nozzle device may be configured to be contacted with respect to the reference straight line by a restoring force of the second nozzle device.

Furthermore, when the first nozzle device is switched from the first state to the second state, a displacement by which an end of the spacing area in the contraction direction is expanded with respect to the reference straight line may be greater than a displacement by which an end of the attachment area in the contraction direction is expanded with respect to the reference straight line.

Furthermore, the second nozzle device may be configured to press the first nozzle device in the contraction direction when the first nozzle device is switched from the first state to the second state, and when the first nozzle device is in the second state, deformation of the attachment area of a first reference value or more may be restricted by the second nozzle device, and deformation of the spacing area of a second reference value or more may be restricted by the attachment area.

Furthermore, the spacing area may be configured to be deformed such that a radius of curvature thereof becomes greater when the first nozzle device is switched from the first state to the second state, and an expansion resisting force applied in the contraction direction may be formed in the first nozzle device when the spacing area is deformed such that the radius of curvature becomes greater.

Furthermore, the spacing area may include a first spacing area defining a side of the spacing area in the contraction direction and defining a portion of the fluid passage, and a second spacing area defining a side of the spacing area in the expansion direction and facing an inner surface of the second nozzle device, and when the first nozzle device is in the second state, a compressive force may be applied to the first spacing area, and a tensile force is applied to the second spacing area.

Furthermore, an end of the first spacing area in the contraction direction may have a shape that is convex in the contraction direction, and an end of the second spacing area in the expansion direction may have a shape that is concave in the contraction direction.

Furthermore, when the first nozzle device is in the first state, a first thickness that is the radial thickness of the first spacing area may be greater than or equal to a second thickness that is the radial thickness of the second spacing area, and when an imaginary area formed between the first spacing area and the second spacing area with respect to the radial direction is a border area such that the first spacing area and the second spacing area are divided, the first thickness may be defined as the radial spacing distance between an end of the first spacing area in the first state in the contraction direction and the border area, and the second thickness may be defined as the radial spacing distance between an end of the second spacing area in the first state in the expansion direction and the border area.

Furthermore, when an area of the second nozzle device, which faces the spacing area, is defined as a (2-1)-th nozzle device and an area of the second nozzle device, which faces the attachment area, is defined as a (2-2)-th nozzle device, and when the first nozzle device is switched from the first state to the second state, the (2-1)-th nozzle device may be configured to be expanded by the same first displacement with respect to the reference straight line, and the (2-2)-th nozzle device may be configured to be expanded by the same displacement with respect to the reference straight line.

Furthermore, when the first nozzle device is switched from the first state to the second state, the first displacement may be smaller than or equal to the second state.

Furthermore, when the first nozzle device and the second nozzle device is switched from the first state to the second state, a strain of the second nozzle device may be smaller than or equal to a strain of the first nozzle device.

Furthermore, a radial thickness of a central portion of the spacing area may be greater than or equal to a radial thickness of a central portion of the attachment area.

Furthermore, a plurality of spacing areas may be provided, and may be arranged to be spaced apart from each other along a circumferential direction of the second nozzle device.

Furthermore, the second nozzle device may extend along a direction, in which the fluid flows, and may have a hollow in an interior thereof, and the first nozzle device may be disposed in the hollow of the second nozzle device.

Furthermore, the spacing area and the attachment area may be integrally formed.

Furthermore, the first nozzle device and the second nozzle device may be formed of an elastic material.

Furthermore, the first nozzle device and the second nozzle device may be integrally formed.

Furthermore, the first nozzle device and the second nozzle device may be separate members that are separable, and a modulus of elasticity of the first nozzle device may be greater than or equal to a modulus of elasticity of the second nozzle device.

A vehicle may include the above-described nozzle assembly. For example, the vehicle may be a fuel cell vehicle, and the nozzle assembly may be a component of an ejector used to eject pressurized fluid to a hydrogen fuel cell of the vehicle.

According to another aspect, a nozzle assembly includes a first nozzle device that provides a fluid passage, in which a fluid flows, and that is expanded or contracted in a state between a first state, in which the fluid passage is not expanded, and a second state, in which the fluid passage is expanded more than in the first state, and a second nozzle device that supports the first nozzle device, a curvature that is convex in a contraction direction that is a direction, in which the first nozzle device is contracted, is formed on at least a portion of the first nozzle device, and the second nozzle device is configured to press the first nozzle device in the contraction direction such that a restoring force is applied to the first nozzle device in the contraction direction when the first nozzle device is switched from the second state to the first state.

Furthermore, at least a portion of the first nozzle device may be deformed such that a radius of curvature becomes smaller while being supported by the second nozzle device when the first nozzle device is switched from the second state to the first state, and a restoring force may be applied to the first nozzle device in the contraction direction when the at least a portion of the first nozzle device is deformed such that the radius of curvature becomes smaller.

### BRIEF DESCRIPTION OF THE DRAWINGS

The above and other objects, features and advantages of the present disclosure will be more apparent from the following detailed description taken in conjunction with the accompanying drawings:
FIG. 1 is a perspective view of an ejector according to an embodiment of the present disclosure;
FIG. 2 is a view illustrating a nozzle assembly when a first nozzle device is switched from a first state to a second state according to an embodiment of the present disclosure;
FIG. 3 is a view illustrating the nozzle assembly when the first nozzle device is switched from the second state to the first state according to an embodiment of the present disclosure;
FIG. 4 is a view illustrating a force that is applied to a first spacing area and a second spacing area when the first nozzle device is in the second state according to an embodiment of the present disclosure;
FIG. 5 is a view illustrating a nozzle assembly when a first nozzle device is in a first state according to another embodiment of the present disclosure; and
FIG. 6 is a view illustrating the nozzle assembly when the first nozzle device is in a second state according to another embodiment of the present disclosure.

### DETAILED DESCRIPTION

It is understood that the term "vehicle" or "vehicular" or other similarterm as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising" when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

Hereinafter, embodiments of the present disclosure will be described in detail with reference to the accompanying drawings. In adding reference numerals to the components of the drawings, it is noted that the same components are denoted by the same reference numerals even when they are drawn in different drawings. Furthermore, in describing the embodiments of the present disclosure, when it is determined that a detailed description of related known configurations and functions may hinder understanding of the embodiments of the present disclosure, a detailed description thereof will be omitted.

Furthermore, in describing the components of the embodiments of the present disclosure, terms, such as first, second, "A", "B", (a), and (b) may be used. The terms are simply for distinguishing the components, and the essence, the sequence, and the order of the corresponding components are not limited by the terms. When it is described that a component is "connected to", is "pressed by", or "flows in" another component, it should be understood that the former component may be directly connected to, be pressed by, or flow in the latter component, but a third component may be "connected", be "pressed", or "flow" between the components.

Hereinafter, an ejector 1 according to an embodiment of the present disclosure will be described with reference to the drawings.

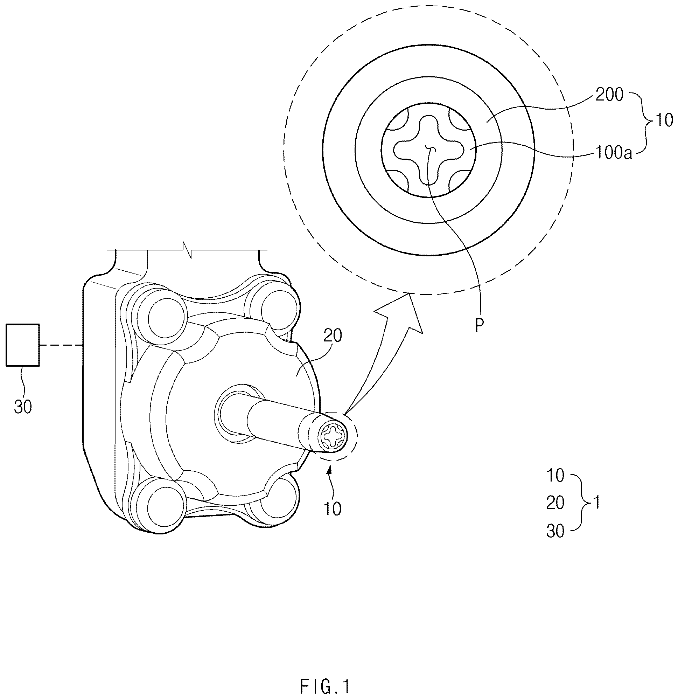

Referring to FIG. 1, the ejector 1 may eject a fluid having a pressure to a targeted location (for example, a hydrogen fuel cell). The ejector 1, as an example, may be provided in a vehicle. The ejector 1 may include a nozzle assembly 10, a support body 20, and a fluid supply device 30.

The nozzle assembly 10 may receive a fluid from the fluid supply device 30. In the nozzle assembly 10, the fluid supplied from the fluid supply device 30 may be ejected to an outside. The nozzle assembly 10, as an example, may be a variable nozzle that is configured to change a volume of a fluid passage "P" when a fluid pressure of the fluid that flows in the fluid passage "P" is changed.

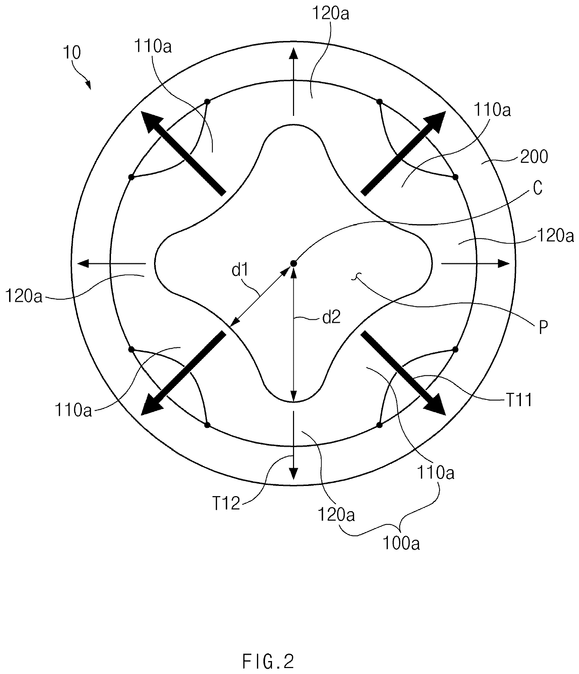

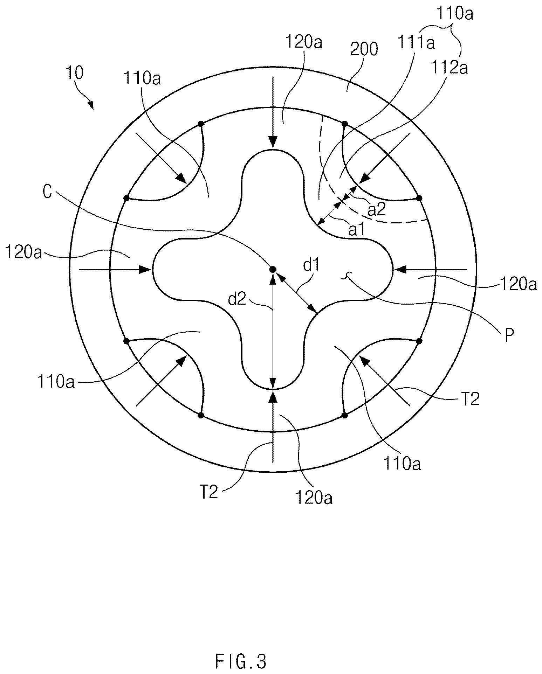

Referring further to FIG. 2, the nozzle assembly 10 may be expanded such that the volume of the fluid passage "P" becomes greater when the fluid pressure of the fluid that flows in the fluid passage "P" becomes higher. Furthermore, referring to FIG. 3, the nozzle assembly 10 may be contracted such that the volume of the fluid passage "P" becomes smaller from a state, in which the nozzle assembly 10 is expanded, when the fluid pressure of the fluid that flows in the fluid passage "P" becomes lower.

In the specification, an expression that a certain component is expanded may mean that all areas of the certain component are moved to be more distant from a reference straight line "C". Furthermore, an expression that the certain component is contracted may mean that all the areas of the certain component become closer to the reference straight line "C". The nozzle assembly 10 may include a first nozzle device 100a and a second nozzle device 200.

The first nozzle device 100a may provide the fluid passage "P" that is configured such that the fluid flows therein. The first nozzle device 100a may have a shape that is rotationally symmetrical with respect to the reference straight line "C". The rotationally symmetrical shape may mean a shape in a state, in which it is viewed as if it was in an original state (corresponding state) even though it is rotated by 360 degrees/n (n is an arbitrary integer) about a specific rotational axis. For example, the first nozzle device 100a may have a shape that is (rotationally) symmetrical with respect to the reference straight line "C" an even number of times. In a detailed example, the first nozzle device 100a may have a shape that is (rotationally) symmetrical with respect to the reference straight line "C" by four times (n=4). In a more detailed example, the first nozzle device 100a that is rotated by 90 degrees about the reference straight line "C" and the first nozzle device 100a before rotation are in the same state.

The reference straight line "C" may mean an imaginary straight line that passes the fluid passage "P" (for example, a center of the fluid passage "P") and extends in a direction, in which the fluid (the fluid that flows in the fluid passage "P") flows.

A material of the first nozzle device 100a, as an example, may be an elastic material. An inner surface of the first nozzle device 100a may define the fluid passage "P". That is, the inner surface of the first nozzle device 100a may have a shape that surrounds the fluid passage "P". The inner surface of the first nozzle device 100a may mean a surface of the first nozzle device 100a in the contraction direction. The contraction direction may mean, among the radial directions, a direction that becomes closer to the reference straight line "C". The radial directions may be defined as directions, in which the reference straight line "C" and the second nozzle device 200 face each other when the second nozzle device 200 is viewed in a direction, in which the reference straight line "C" extends. Furthermore, an outer surface of the first nozzle device 100a may mean a surface of the first nozzle device 100a in the expansion direction. The contraction direction may mean an opposite direction to the contraction direction. That is, the expansion direction may mean, among the radial directions, a direction that becomes more distant from the reference straight line "C".

The inner surface of the first nozzle device 100a may contact (for example, directly contact) the fluid that flows in the fluid passage "P". For example, the first nozzle device 100a may be expanded with respect to the reference straight line "C" by the fluid when the fluid pressure of the fluid in contact is higher than a threshold pressure. Furthermore, when the first nozzle device 100a is expanded, the second nozzle device 200 may be expanded with respect to the reference straight line "C".

Referring to FIGS. 2 and 3 again, the first nozzle device 100a may be deformed along the expansion direction and the contraction direction with respect to the reference straight line "C" between a first state and a second state. When the first nozzle device 100a is in the first state, the fluid passage "P" may be in an initial state, in which it is not expanded. For example, when the fluid pressure of the fluid that flows in the fluid passage "P" is a specific reference pressure or lower, the first nozzle device 100a may be in the first state. The first state may be named `a contraction state' or 'an initial state'.

Furthermore, when the first nozzle device 100a is in the second state, the fluid passage "P" may be in a state, in which it is expanded more than in the first state. For example, when the fluid pressure of the fluid that flows in the fluid passage "P" is higher than the reference pressure, the first nozzle device 100a may be in the second state. The second state may be named `an expansion state'. The first nozzle device 100a may include a spacing area 110a and an attachment area 120a.

The spacing area 110a may be disposed to be spaced apart from a portion of the second nozzle device 200. For example, the portion of the second nozzle device 200 may mean a portion of the inner surface of the second nozzle device 200, which faces the outer surface of the spacing area 110a.

The spacing area 110a may have a shape that is recessed in, among the radial directions, a direction that faces the reference straight line. Among the radial directions, the direction that faces the reference straight line may be defined as the same direction as the contraction direction. Furthermore, among the radial directions, a direction that becomes more distant from the reference straight line may be defined as the same direction as the expansion direction. That is, the spacing area 110a may have a shape that protrudes in the contraction direction that is a direction, in which the portion of the second nozzle device 200 faces the reference straight line "C". For example, an inner surface of the spacing area 110a may have a cape shape that is convex in the contraction direction. The inner surface of the spacing area 110a may be named 'a first inner surface'.

Furthermore, when the first nozzle device 100a is in the second state, a restoring force in the contraction direction due to elasticity may be applied to the spacing area 1 10a. That is, when the first nozzle device 100a is switched from the second state to the first state, the spacing area 110a may be contracted with respect to the reference straight line "C" by the restoring force. For example, when the first nozzle device 100a is switched from the second state to the first state, the second nozzle device 200 may press the first nozzle device 100a in the contraction direction such that the restoring force in the contraction direction is applied to the first nozzle device 100a. That is, the second nozzle device 200 in the expanded state may provide a portion of the contracting restoring force that is applied thereto to the first nozzle device 100a. In this way, the first nozzle device 100a may be contracted with respect to the reference straight line "C" by the contracting restoring force that is provided from the second nozzle device 200.

Furthermore, when the first nozzle device 100a is switched from the first state to the second state, the spacing area 110a may be deformed such that a radius of curvature of the first inner surface becomes greater while being supported by the second nozzle device 200. In this way, when the spacing area 110a is deformed such that the radius of curvature of the first inner surface becomes greater, an expansion resisting force that is applied in the contraction direction may be formed in the first nozzle device 100a. The expansion resisting force may mean a force that resists against a force (as an example, a first force that is a force that is applied to the first nozzle device 100a in the expansion direction by the fluid pressure of the fluid that flows in the fluid passage "P") that is applied to the first nozzle device 100a in the expansion direction while the first nozzle device 100a is expanded

For example, when the expansion resisting force is lower than a first force, the first nozzle device 100a may be expanded. As another example, when the expansion resisting force and the first force are the same, the expansion and contraction of the first nozzle device 100a may be stopped. As another example, when the expansion resisting force is higher than the first force, the first nozzle device 100a may be contracted.

The expansion resisting force, as an example, may mean an elastic restoring force in the contraction direction by the elasticity that is formed in the spacing area 110a itself. For example, the spacing area 110a may be formed of an elastic material, by which the restoring force by the elasticity may be formed in the spacing area 110a itself. That is, as the first nozzle device 100a is formed of the elastic material that allows a change in a size of the radius of curvature, the expansion resisting force may be applied to the first nozzle device 100a through its own shape. That is, the first nozzle device 100a may be contracted with respect to the reference straight line "C" by its own shape and a contracting restoring force that is provided by the second nozzle device 200.

When the first nozzle device 100a is switched from the first state to the second state, a size, by which a central portion of the spacing area 110a is expanded, may be larger than a size, by which a peripheral portion of the spacing area 110a is expanded. Moreover, when the first nozzle device 100a is switched from any one of the first state or the second state to the other one, a size, by which the central portion of the spacing area 110a is expanded or contracted, may be larger than a size, by which the peripheral portion of the spacing area 110a is expanded or contracted. Furthermore, when the first nozzle device 100a is switched from the first state to the second state, a radius of curvature of the first inner surface in the radial direction may become greater.

The central portion of the spacing area 110a may mean an area of the spacing area 110a, which is closest to the reference straight line "C". Furthermore, the peripheral portion of the spacing area 110a may mean the remaining area of the spacing area 1 10a, except for the central portion. The peripheral portion of the spacing area 110a may be connected to the attachment area 120a. The spacing area 110a may include a first spacing area 111a and a second spacing area 112a.

The first spacing area 111a may define a side of the spacing area 110a in the contraction direction. The first spacing area 111a may define a portion of the fluid passage "P". For example, the first spacing area 111a may define a portion of the fluid passage "P", and the attachment area 120a may define the remaining portion of the fluid passage "P".

A surface of the first spacing area 111a in the contraction direction may define a portion of the inner surface of the first nozzle device 100a. An end of the first spacing area 111a in the contraction direction may have a shape that is convex in the contraction direction.

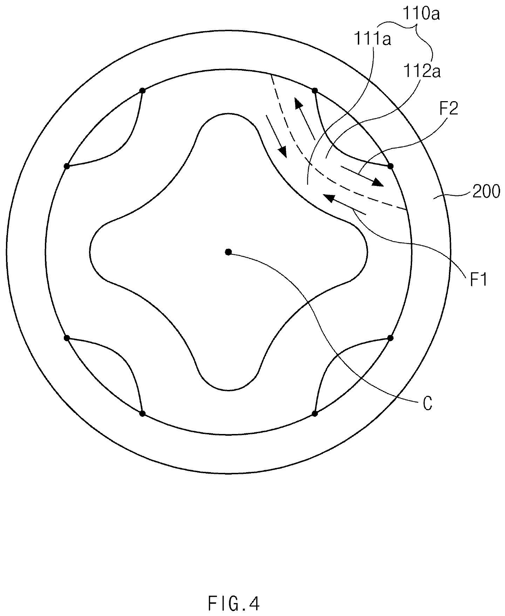

Referring further to FIG. 4, when the first nozzle device 100a is in the second state, a compressive force F11 may be applied to the first spacing area 111a. For example, when the first nozzle device 100a is in the second state, the compressive force F11 may be applied to the first spacing area 111a in a direction, in which the peripheral portion of the spacing area 110a faces the central portion thereof.

The second spacing area 112a may define a side of the spacing area 110a in the expansion direction. The second spacing area 112a may face an inner surface of the second nozzle device 200. A surface of the second spacing area 112a may define a portion of an outer surface of the first nozzle device 100a. An end of the second spacing area 112a in the expansion direction may have a shape that is concave in the contraction direction. An empty space may be defined between the second spacing area 112a and the second nozzle device 200.

Furthermore, when the first nozzle device 100a is in the second state, a tensile force F12 may be applied to the second spacing area 112a. For example, when the first nozzle device 110a is in the second state, the tensile force F12 may be applied to the second spacing area 112a in a direction, in which the central portion of the spacing area 110a faces the peripheral portion thereof.

A border area (for example, a dotted line illustrated in FIG. 3) may be defined between the first spacing area 111a and the second spacing area 112a. The border area may be divided into the first spacing area 111a and the second spacing area 112a. For example, the border area may be defined as an imaginary curved surface that is defined between the first spacing area 111a and the second spacing area 112a with respect to the radial direction.

In more detail, the border area may mean a border that distinguishes an area (as an example, the first spacing area 111a) of the spacing area 110a, to which the compressive force F11 is applied, and an area (as an example, the second spacing area 112a) of the spacing area 110a, to which the tensile force F12 is applied, with respect to the radial direction. For example, the compressive force F11 may be applied to an area (as an example, the first spacing area 111a) of the spacing area 1 10a, which is located closer to the side of the contraction direction than the border area, and the tensile force F12 may be applied to an area (as an example, the second spacing area 112a) of the spacing area 110a, which is located closer to the side of the expansion direction than the border area.

Furthermore, when the nozzle assembly 10 is viewed along a direction, in which the reference straight line "C" extends, the border area may be formed to be convex in the contraction direction. In a detailed example, a central portion of the border area may be located between a central portion of the first spacing area 111a and a central portion of the second spacing area 112a. Furthermore, a peripheral portion of the border area may extend to be curved from the central portion of the border area to the second nozzle device 200. A plurality of border areas may be formed to correspond to a plurality of spacing areas 110a, respectively.

Furthermore, referring to FIG. 3 again, when the first nozzle device 100a is in the first state, a first thickness a1 that is a radial thickness of the first spacing area 111a may be greater than a second thickness a2 that is a radial thickness of the second spacing area 112a. The first thickness a1 may be defined as a radial spacing distance between an end of the first spacing area 111a in the contraction direction and the border area. Furthermore, the second thickness a2 may be defined as a radial spacing distance between an end of the second spacing area 112a in the expansion direction and the border area.

Furthermore, as the first thickness a1 becomes greater, a deformation of the shape of the first spacing area 111a may become smaller due to the compressive force F11 that is applied to the first spacing area 111a. In this way, when the deformation of the shape of the first spacing area 111a becomes smaller, a plastic deformation of the first spacing area 111a may be minimized. Meanwhile, the spirits of the present disclosure are not limited thereto, and the first thickness a1 and the second thickness a2 may be the same.

Furthermore, when the first nozzle device 100a is in the first state, a radius of curvature of an end of the first spacing area 111a in the contraction direction, in the radial direction, may be greater than a radius of curvature of an end of the second spacing area 112a in the expansion direction, in the radial direction. However, the present disclosure is not limited to the example, and the radius of curvature of the end of the first spacing area 111a in the contraction direction, in the radial direction, may be the same as the radius of curvature of the end of the second spacing area 112a in the expansion direction, in the radial direction. The radial direction may mean a direction that is perpendicular to the reference straight line "C". The radial direction may be understood as the expansion direction and the contraction direction. That is, when the first nozzle device 100a is in the first state, a radius of curvature of an inner surface of the spacing area 110a in the radial direction may be greater than a radius of curvature of an outer surface of the spacing area 110a in the radial direction. Furthermore, as the radius of curvature of the end of the first spacing area 111a in the contraction direction, in the radial direction, becomes greater, a deformation of the shape of the first spacing area 111a may become smaller due to the compressive force F11 that is applied to the first spacing area 111a. In this way, when the deformation of the shape of the first spacing area 111a becomes smaller, a plastic deformation of the first spacing area 111a may be minimized.

The attachment area 120a may be attached to another portion of the second nozzle device 200. For example, the another portion of the second nozzle device 200 may mean a portion of the inner surface of the second nozzle device 200, which faces the outer surface of the attachment area 120a. Moreover, the another portion of the second nozzle device 200 may be attached to the outer surface of the attachment area 120a.

When the first nozzle device 100a is switched from the first state to the second state, the attachment area 120a may press the another portion of the second nozzle device 200 in the expansion direction. Furthermore, when the first nozzle device 100a is switched from the second state to the first state, the second nozzle device 200 may press the attachment area 120a in the contraction direction.

The attachment area 120a may have a shape that protrudes in, among the radial directions, a direction that becomes more distant from the reference straight line "C". That is, the attachment area 120a may have a shape that protrudes in the expansion direction that is a direction, in which the reference straight line "C" faces the another portion of the second nozzle device 200. For example, the inner surface of the attachment area 120a may have a bay shape that is concave in the expansion direction. The inner surface of the attachment area 120a may be named `a second inner surface'. When the nozzle assembly 10 is viewed in a direction, in which the fluid flows, the first inner surface and the second inner surface may have shapes that are continuous to each other without any notch.

Furthermore, the radius of curvature of the first inner surface in the radial direction may be greater than the radius of curvature of the second inner surface. That is, a degree, by which the inner surface of the attachment area 120a is concave in the expansion direction, may be greater than a degree, by which the inner surface of the spacing area 110a is convex in the contraction direction.

Furthermore, a first distance d1 that is a spacing distance between the spacing area 110a and the reference straight line "C" may be smaller than a second distance d2 that is a spacing distance between the attachment area 120a and the reference straight line "C". The first distance d1 may mean a radial spacing distance between the first inner surface and the reference straight line "C". Furthermore, the second distance d2 may mean a radial spacing distance between the second inner surface and the reference straight line "C".

Furthermore, when the first nozzle device 100a is in the second state, a restoring force in the contraction direction may be applied to the attachment area 120a. For example, when the first nozzle device 100a is switched from the second state to the first state, the attachment area 120a may be contracted with respect to the reference straight line "C" by the restoring force. In a more detailed example, when the first nozzle device 100a is switched from the first state to the second state, a size, by which the end of the spacing area 110a in the contraction direction is expanded, may be larger than a size, by which the end of the attachment area 120a in the contraction direction is expanded. That is, when the first nozzle device 100a is expanded, a first deformation T11 that is a deformation of the spacing area 110a may be greater than a second deformation T12 that is a deformation of the attachment area 120a.

Furthermore, when the first nozzle device 100a is switched from the first state to the second state, a size, by which the central portion of the attachment area 120a is expanded, may be larger than a size, by which the peripheral portion of the attachment area 120a is expanded. Moreover, when the first nozzle device 100a is switched from any one of the first state or the second state to the other state, a size, by which the central portion of the attachment area 120a is expanded or contracted, may be larger than a size, by which the peripheral portion of the attachment area 120a is expanded or contracted. Furthermore, when the first nozzle device 100a is switched from the second state to the first state, a radius of curvature of the second inner surface in the radial direction may become greater.

The central portion of the attachment area 120a may mean an area of the attachment area 120a, which is most distant from the reference straight line "C". Furthermore, the peripheral portion of the attachment area 120a may mean the remaining area of the attachment area 120a, except for the central portion. The peripheral portion of the attachment area 120a may be connected to the peripheral portion of the spacing area 110a.

A radius of curvature of at least a portion of the outer surface of the attachment area 120a in the radial direction may correspond to a radius of curvature of at least a portion of the inner surface of the second nozzle device 200 in the radial direction. The outer surface of the attachment area 120a may be disposed on an opposite side of the second inner surface, and may define the surface of the attachment area 120a in the expansion direction. For example, a radius of curvature of a portion of the outer surface of the attachment area 120a, which contacts the inner surface of the second nozzle device 200, in the radial direction, may be the same as a radius of curvature of a portion of the second nozzle device, which contacts the outer surface of the attachment area 120a, in the radial direction.

Furthermore, when the first nozzle device 100a is in the second state, the attachment area 120a may be supported by the second nozzle device 200, and the spacing area 110a may be supported by the attachment area 120a. For example, when the first nozzle device 100a is in the second state, a deformation of the attachment area 120a to a first reference value or more by the second nozzle device 200 may be restrained. That is, the second nozzle device 200 may restrict excessive expansion of the attachment area 120a to more than the first reference value. The first reference value may mean a maximum value of a strain that does not cause a plastic deformation in the attachment area 120a.

Furthermore, a deformation of the spacing area 110a to more than a second reference value by the attachment area 120a may be restricted. That is, the attachment area 120a may restrict excessive expansion of the spacing area 110a to more than a second reference value. The second reference value may mean a maximum value of a strain that does not cause a plastic deformation in the spacing area 110a.

Furthermore, a plurality of spacing areas 110a and a plurality of attachment areas 120a may be provided. For example, four spacing areas 110a and four attachment areas 120a may be provided. The plurality of spacing areas 110a and the plurality of attachment areas 120a may be alternately arranged along a circumferential direction of the second nozzle device 200. That is, one spacing area 110a may be disposed between, among the plurality of attachment areas 120a, two adjacent attachment areas 120a. Moreover, the one spacing area 110a may extend between the two adjacent attachment areas 120a. The spacing areas 110a and the attachment areas 120a may be integrally formed.

The second nozzle device 200 may be disposed to surround the first nozzle device 100a. A portion of the inner surface of the second nozzle device 200 may contact (for example, directly contact) a portion of the outer surface of the first nozzle device 100a. When the fluid pressure of the fluid becomes lower from the state, in which the first nozzle device 100a is expanded, the second nozzle device 200 may be contracted with respect to the reference straight line "C" by a restoring force (as an example, a restoring force due to elasticity applied to the second nozzle device 200). That is, the fluid pressure of the fluid that flows in the fluid passage becomes lower with reference to the state, in which the first nozzle device 100a is expanded, the second nozzle device 200 may be contracted with respect to the reference straight line "C" by the restoring force that is applied to itself. Furthermore, the first nozzle device 100a may be contracted with respect to the reference straight line "C" by the restoring force of the second nozzle device 200. For example, when the second nozzle device 200 is contracted, the second nozzle device 200 may press the first nozzle device 100a to a radially inner side.

The second nozzle device 200 may have a radius that is greater than that of the first nozzle device 100a. In this way, as the second nozzle device 200 has the radius that is greater than that of the first nozzle device 100a, a second strain that is a strain when the second nozzle device 200 is expanded, may be smaller than a first strain that is a strain when the first nozzle device 100a is expanded.

That is, when the same stress is applied to the first nozzle device 100a and the second nozzle device 200, the second strain may be smaller than or equal to the first strain. For example, as the first nozzle device 100a directly contacts the fluid of a high pressure, the inner surface of the first nozzle device 100a may be directly pressed to be expanded as a whole. Furthermore, the second nozzle device 200 may absorb, among the fluid pressures of the fluid of the high pressure, the remaining pressure that is not absorbed by the first nozzle device 100a. As a detailed example, as a portion of the fluid pressure of the fluid is directly applied to the spacing area 110a and the attachment area 120a, the spacing area 110a and the attachment area 120a are deformed (as an example, expanded), and the remainder of the fluid pressure is applied locally or indirectly only to a (2-2)-th nozzle device (an area of the second nozzle device 200, which contacts the attachment area 120a), which will be described below, to deform the (2-2)-th nozzle device. Accordingly, the second strain may be smaller than or equal to the first strain.

In this way, because a probability of the second strain being smaller than the first strain is high, a probability of the second nozzle device 200 being plastically deformed become lower even though the nozzle assembly 10 is operated for a long time. Furthermore, when the second nozzle device 200 is not plastically deformed, the second nozzle device 200 may be easily restored to the contracted shape before the expansion when the second state is switched to the first state.

Furthermore, as the second nozzle device 200 structurally constricts the first nozzle device 100a, the first nozzle device 100a may be easily restored to the contracted shape before the expansion when the first nozzle device 100a is switched from the second state to the first state. Accordingly, a deformation degree of an area of the first nozzle device 100a in the first state after the nozzle assembly 10 is operated several times as compared with an area of the first nozzle device 100a in the initial first state may be minimized.

Furthermore, the second nozzle device 200 may suppress an overexpansion of the first nozzle device 100a when the first nozzle device 100a and the second nozzle device 200 are in the second state. Accordingly, a deformation degree of an area of the first nozzle device 100a in the second state after the nozzle assembly 10 is operated several time as compared with an area of the first nozzle device 100a in the initial second state may be minimized.

In this way, because the deformation of the first nozzle device 100a is minimized and the probability of the second nozzle device 200 being plastically deformed is significantly low at the same time even after the nozzle assembly 10 is operated several times, a durability of the nozzle assembly 10 is enhanced.

In this way, as the second strain is lower than the first strain, the second nozzle device 200 may be easily restored to an original shape without any plastic deformation. In this way, as an original shape of the second nozzle device 200 is easily restored, the first nozzle device 100a that contacts the second nozzle device 200 may be easily stored to the original shape when the fluid pressure of the fluid that flows in the fluid passage "P" becomes lower.

The second nozzle device 200 may extend along a flow direction that is a direction, in which the fluid flows. Furthermore, the second nozzle device 200 may have a cylindrical shape having a hollow in an interior thereof. Furthermore, a radial width of an end of the second nozzle device 200 in the flow direction may become smaller or equal as it goes in the flow direction. For example, the radial width of the end of the second nozzle device 200 in the flow direction may become smaller as it goes in the flow direction. In a detailed example, an end of the hollow formed in the second nozzle device 200, in the flow direction, may have a shape, of which a radial width becomes smaller as it goes in the flow direction. However, the present disclosure is not limited to the example, and an end of the second nozzle device 200 in the flow direction may have a shape, of which a radial width is constant as it goes in the flow direction, and an end of the hollow of the second nozzle device 200 in the flow direction may have a shape, of which a radial width becomes smaller as it goes in the flow direction. The first nozzle device 100a may be disposed in the hollow of the second nozzle device 200.

Furthermore, the second nozzle device 200 and the first nozzle device 100a may be separate members that may be separated from each other. A first modulus of elasticity that is a modulus of elasticity of the first nozzle device 100a may be greater than or equal to a second modulus of elasticity that is a modulus of elasticity of the second nozzle device 200.

Furthermore, a first nozzle thickness that is a radial thickness of the first nozzle device 100a may be different from a second nozzle thickness that is a radial thickness of the second nozzle device 200. For example, the first nozzle thickness may be greater than or equal to the second nozzle thickness. The first nozzle thickness may mean a radial spacing distance between the inner surface of the first nozzle device 100a and the outer surface of the first nozzle device 100a. Furthermore, the second nozzle thickness may mean a radial spacing distance between the inner surface of the second nozzle device 200 and the outer surface of the second nozzle device 200.

Furthermore, a first central thickness that is the radial thickness of the central portion of the spacing area 110a may be different from a second central thickness that is the radial thickness of the central portion of the attachment area 120a. For example, the first central thickness may be greater than or equal to the second central thickness.

The first central thickness may be defined as a radial spacing distance between an end of the central portion of the spacing area 110a in the contraction direction and an end of the central portion of the spacing area 110a in the expansion direction. Furthermore, the second central thickness may be defined as a spacing distance between an end of the central portion of the attachment area 120a in the contraction direction and an end of the central portion of the attachment area 120a in the expansion direction. Furthermore, the first central thickness may be defined as a sum of the first thickness a1 and the second thickness a2.

In this way, the nozzle assembly 10 may have features, in which the first modulus of elasticity may be greater than or equal to the second modulus of elasticity, the first nozzle thickness may be greater than or equal to the second nozzle thickness, and the first central thickness may be greater than or equal to the second central thickness. Through the features of the moduli of elasticity and the thicknesses of the first nozzle device 100a and the second nozzle device 200, only a deformation of the first nozzle device 100a without any deformation of the second nozzle device 200 may be prevented when the nozzle assembly 10 is deformed between the first state and the second state.

That is, when only the first nozzle device 100a is deformed while the second nozzle device 200 is not deformed, an excessive deformation of the first nozzle device 100a cannot be restrained through the second nozzle device 200 or the restoring force cannot be provided to the first nozzle device 100a, and the nozzle assembly 10 according to the sprits of the present disclosure may overcome the problems through the above-described features.

That is, through the above features of the nozzle assembly 10, an excessive deformation of the first nozzle device 100a may be restrained through the second nozzle device 200 or the restoring force may be provided to the first nozzle device 100a.

However, the spirits of the present disclosure are not limited to the example, and the first nozzle device 100a and the second nozzle device 200 may be integrally formed.

The second nozzle device 200 may include a (2-1)-th nozzle device and the (2-2)-th nozzle device. The (2-1)-th nozzle device may be defined as an area of the second nozzle device 200, which faces the spacing area 1 10a. Furthermore, the (2-2)-th nozzle device may be defined as an area of the second nozzle device 200, which faces the attachment area 120a. A plurality of (2-1)-th nozzle devices and a plurality of (2-2)-th nozzle devices may be provided. The plurality of (2-1)-th nozzle devices and the plurality of (2-2)-th nozzle devices may be alternately arranged along the circumferential direction of the second nozzle device 200. Furthermore, the plurality of (2-1)-th nozzle devices and the (2-2)-th nozzle devices may be integrally formed.

When the first nozzle device 100a is switched from the first state to the second state, the plurality of (2-1)-th nozzle devices may be expanded by the same first displacement with respect to the reference straight line "C". Furthermore, when the first nozzle device 100a is switched from the first state to the second state, the plurality of (2-2)-th nozzle devices may be expanded by the same second displacement with respect to the reference straight line "C".

Furthermore, the first displacement may be smaller than or equal to the second displacement. When the first displacement is smaller than the second displacement, a radius of curvature of the (2-1)-th nozzle device in the radial direction may be greater than a radius of curvature of the (2-2)-th nozzle device in the radial direction.

Furthermore, all the areas of the inner surface of the second nozzle device 200 may be spaced apart from the reference straight line "C" by the same distance. That is, when the second nozzle device 200 is viewed in the flow direction, the inner surface of the second nozzle device 200 may have a circular shape.

Referring back to FIG. 3, when the first nozzle device 100a is switched from the first state to the second state, all the areas of the inner surface of the second nozzle device 200 may be expanded by the same size T2 with respect to the reference straight line "C". Furthermore, when the first nozzle device 100a is switched from the second state to the first state, all the areas of the inner surface of the second nozzle device 200 may be contracted by the same size T2 with respect to the reference straight line "C". That is, when the first nozzle device 100a is switched from any one of the first state or the second state to the other one, the deformations T2 of all the areas of the second nozzle device 200 may be the same.

The support body 20 may be a frame that may support the nozzle assembly 10. The support body 20 may fix the nozzle assembly 10 to a body of the vehicle. Furthermore, the support body 20 may guide the fluid discharged from the fluid supply device 30 to the nozzle assembly 10.

The fluid supply device 30 may supply the fluid to the nozzle assembly 10. The fluid supply device 30 may be various devices, such as a tank, from which the fluid may be discharged to the nozzle assembly 10.

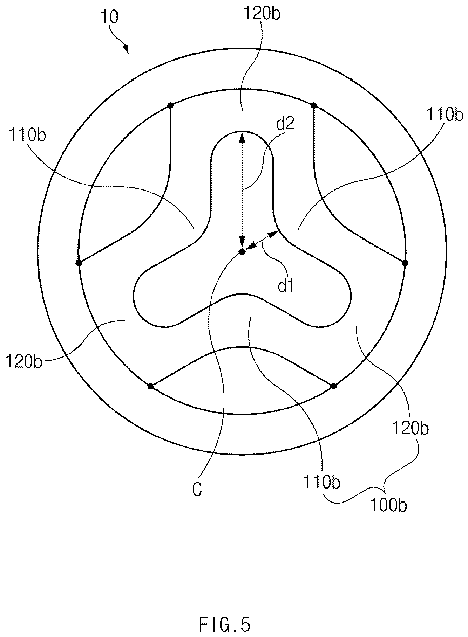

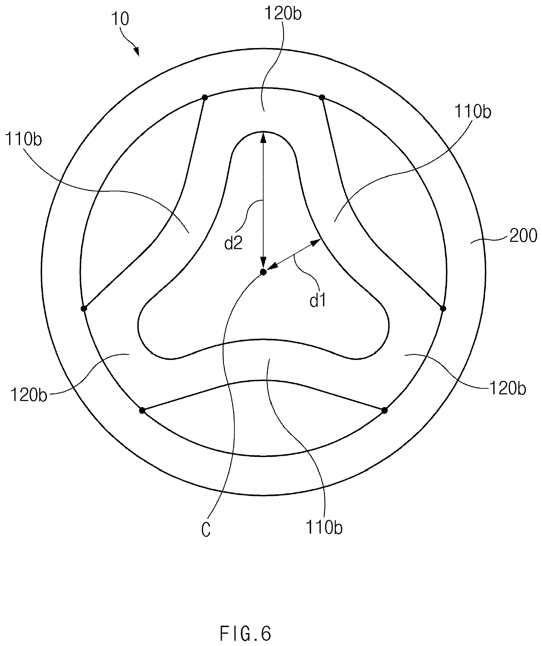

Hereinafter, the nozzle assembly 10 according to another embodiment of the present disclosure will be described with reference to FIGS. 5 and 6. In a description of the another embodiment of the present disclosure, differences from the first embodiment of the present disclosure will be mainly described. The nozzle assembly 10 may include a first nozzle device 100b and the second nozzle device 200. A description of the contents of the second nozzle device 200 will be replaced by the description made in the one embodiment of the present disclosure.

Referring to FIGS. 5 and 6, the first nozzle device 100b according to another embodiment of the present disclosure may have a shape that is (rotationally) symmetrical by an odd number of times with respect to the reference straight line "C". For example, the first nozzle device 100b may have a shape that is (rotationally) symmetrical by three times (n=3) with respect to the reference straight line "C". In a detailed example, the first nozzle device 100b that is rotated by 120 degrees with respect to the reference straight line "C" and the first nozzle device 100b before the rotation may be in the same state. The first nozzle device 100b may include a spacing area 110b and an attachment area 120b.

A plurality of spacing areas 110b and a plurality of attachment areas 120b may be provided. For example, three spacing areas 110b and three attachment areas 120b may be provided.

The nozzle assembly may ensure a durability performance by minimizing a plastic deformation regardless of a magnitude of a fluid pressure.

Furthermore, in describing the components of the embodiments of the present disclosure, terms, such as first, second, "A", "B", (a), and (b) may be used. The terms are simply for distinguishing the components, and the essence, the sequence, and the order of the corresponding components are not limited by the terms. Furthermore, unless otherwise defined, all terms, including technical and scientific terms, used herein have the same meaning as commonly understood by those skilled in the art to which the present disclosure pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

The above description is a simple exemplification of the technical spirits of the present disclosure, and the present disclosure may be variously corrected and modified by those skilled in the art to which the present disclosure pertains without departing from the essential features of the present disclosure. Accordingly, the embodiments disclosed in the present disclosure is not provided to limit the technical spirits of the present disclosure but provided to describe the present disclosure, and the scope of the technical spirits of the present disclosure is not limited by the embodiments. Accordingly, the technical scope of the present disclosure should be construed by the attached claims, and all the technical spirits within the equivalent ranges fall within the scope of the present disclosure.

## Claims

1. A nozzle assembly for vehicle comprising:
a first nozzle device configured to provide a fluid passage, in which a fluid flows; and
a second nozzle device disposed to surround the first nozzle device,
wherein when an imaginary straight line passing through the fluid passage and extending in a direction, in which the fluid flows, is defined as a reference straight line,
the first nozzle device includes:
a spacing area configured to be recessed in a direction that faces the reference straight line to be spaced apart from a portion of the second nozzle device.

2. The nozzle assembly of claim 1, wherein the spacing area is recessed in the direction that is a radial direction of the second nozzle device.

3. The nozzle assembly of claim 1 or 2, further comprising:
an attachment area having a shape protruding in a direction that becomes more distant from the reference straight line to be attached to another portion of the second nozzle device,

4. The nozzle assembly of claim 3, wherein a first distance that is a spacing distance between the spacing area and the reference straight line is smaller than a second distance that is a spacing distance between the attachment area and the reference straight line.

5. The nozzle assembly of claim 3, wherein the fluid passage is defined by an inner surface of the first nozzle device, and
wherein the inner surface of the first nozzle device includes:
a first inner surface defining an inner surface of the spacing area and having a cape shape; and
a second inner surface defining an inner surface of the attachment area and having a bay shape.

6. The nozzle assembly of claim 5, wherein a radius of curvature of the first inner surface in the radial direction that is a direction that is perpendicular to the reference straight line is greater than or equal to a radius of curvature of the second inner surface in the radial direction.

7. The nozzle assembly of claim 5, wherein the radial direction is defined as a direction that is perpendicular to the reference straight line, and
wherein a radius of curvature of at least a portion of an outer surface of the attachment area disposed on an opposite side of the second inner surface, in the radial direction, corresponds to a radius of curvature of at least a portion of an inner surface of the second nozzle device in the radial direction.

8. The nozzle assembly of any one of the preceding claims, wherein when, among the radial directions, a direction that faces the reference straight line is defined as a contraction direction and, among the radial directions, a direction that becomes more distant from the reference straight line is defined as an expansion direction,
each of the first nozzle device and the second nozzle device is configured to be expanded in the expansion direction or contracted in the contraction direction with respect to the reference straight line in a state between a first state in which the fluid passage is not expanded, and a second state in which the fluid passage is expanded more than in the first state.

9. The nozzle assembly of any one of the preceding claims, wherein an inner surface of the first nozzle device is configured to contact the fluid flowing in the fluid passage,
wherein the first nozzle device is configured to be expanded with respect to the reference straight line by the fluid in contact when a fluid pressure of the fluid is higher than a threshold pressure, and
wherein the second nozzle device is configured to be expanded with respect to the reference straight line through expansion of the first nozzle device.

10. The nozzle assembly of claim 9, wherein a portion of an inner surface of the second nozzle device is configured to contact a portion of an outer surface of the first nozzle device,
wherein the second nozzle device is configured to be contacted with respect to the reference straight line by a restoring force when the fluid pressure of the fluid becomes lower from the state, in which the first nozzle device is expanded, and
wherein the first nozzle device is configured to be contacted with respect to the reference straight line by the restoring force of the second nozzle device.

11. The nozzle assembly of any one of claims 6 to 8, wherein when the first nozzle device is switched from the first state to the second state,
a displacement by which an end of the spacing area in the contraction direction is expanded with respect to the reference straight line is greater than a displacement by which an end of the attachment area in the contraction direction is expanded with respect to the reference straight line.

12. The nozzle assembly of any one of claims 6 to 9, wherein the second nozzle device is configured to press the first nozzle device in the contraction direction when the first nozzle device is switched from the first state to the second state, and
wherein when the first nozzle device is in the second state, deformation of the attachment area of a first reference value or more is restricted by the second nozzle device, and deformation of the spacing area of a second reference value or more is restricted by the attachment area.

13. The nozzle assembly of claim 10, wherein the spacing area is configured to be deformed such that a radius of curvature thereof becomes greater when the first nozzle device is switched from the first state to the second state, and
wherein an expansion resisting force applied in the contraction direction is formed in the first nozzle device when the spacing area is deformed such that the radius of curvature becomes greater.

14. The nozzle assembly of any one of claims 6 to 11, wherein the spacing area includes:
a first spacing area defining a side of the spacing area in the contraction direction and defining a portion of the fluid passage; and
a second spacing area defining a side of the spacing area in the expansion direction and facing an inner surface of the second nozzle device, and
wherein when the first nozzle device is in the second state, a compressive force is applied to the first spacing area, and a tensile force is applied to the second spacing area.

15. The nozzle assembly of claim 12, wherein an end of the first spacing area in the contraction direction has a shape that is convex in the contraction direction, and
wherein an end of the second spacing area in the expansion direction has a shape that is concave in the contraction direction.

16. The nozzle assembly of claim 12 or 13, wherein when the first nozzle device is in the first state, a first thickness that is the radial thickness of the first spacing area is greater than or equal to a second thickness that is the radial thickness of the second spacing area, and
wherein when an imaginary area formed between the first spacing area and the second spacing area with respect to the radial direction is a border area such that the first spacing area and the second spacing area are divided:
the first thickness is defined as the radial spacing distance between an end of the first spacing area in the first state in the contraction direction and the border area, and
the second thickness is defined as the radial spacing distance between an end of the second spacing area in the first state in the expansion direction and the border area.

17. The nozzle assembly of any one of claims 6 to 14, wherein when the first nozzle device and the second nozzle device are switched from the first state to the second state,
a strain of the second nozzle device is smaller than or equal to a strain of the first nozzle device.

18. The nozzle assembly of any one of claims 1 to 15, wherein a radial thickness of a central portion of the spacing area is greater than or equal to a radial thickness of a central portion of the attachment area.

19. The nozzle assembly of any one of claims 1 to 16, wherein a plurality of spacing areas are provided, and are arranged to be spaced apart from each other along a circumferential direction of the second nozzle device.

20. The nozzle assembly of any one of claims 1 to 17, wherein the second nozzle device extends along a direction, in which the fluid flows, and has a hollow in an interior thereof, and
wherein the first nozzle device is disposed in the hollow of the second nozzle device.

21. The nozzle assembly of any one of claims 1 to 18, wherein the spacing area and the attachment area are integrally formed, and
wherein the first nozzle part and the second nozzle part are formed of an elastic material.
